# EUROPEAN PATENT APPLICATION

(11) **EP 1 718 061 A1**
(43) Date of publication of application: **02.11.2006**
(21) Application number: 05425264.8
(22) Date of filing: 27.04.2005
(51) Int. Cl.: H04N 5/00, H04N 5/445

(54) **Multimedia device**

(71) Applicant: C.I.D.P. Consulenza Informatica Dante Pedron, 35033 Treponti di Teolo (PD) (IT)
(72) Inventor: Pedron, Dante, 35033 Treponti di Teolo (PD) (IT)
(74) Representative: Petruzziello, Aldo

(57) **Abstract**

A multimedia device (100) comprises a main board (10) which has hardware able to implement the functions of a personal computer (PC), a monitor (A) operationally connected to the main board (10) to display images, speakers (G) operationally connected to the main board (10) to broadcast an audio signal, a Set-Top-Box interface (C) designed to be connected to a television aerial to implement the functions of a digital television decoder, operationally connected to the main board (10) to allow display of the digital television signal, by means of the monitor (A), and an infrared (IR) receiver operationally connected to the Set-Top-Box interface (C) and to the main board (10) to control the Set-Top-Box interface (C) and the main board (10) by means of a single remote control.

## Description

The present invention refers to a multimedia device able to integrate the various audio and video entertainment devices and accessories generally used in the home environment.

Various types of audio and video entertainment devices normally used in the home environment are currently known commercially, such as, for example, personal computers (PC), television sets, terrestrial digital decoders, satellite decoders, DVD players and home theatre systems. As is known, the PC is controlled by the user through a keyboard and mouse and the other devices are controlled by the user through their respective remote controls.

The current situation presents various drawbacks due to the presence of several devices, remote controls and user instructions. This type of multimedia entertainment system of the prior art is born and develops with separate devices that are not aligned in their respective technologies because they are purchased at different times. The end result is a multitude of untidily integrated devices that communicate poorly with each other or, in some cases, in order to communicate, must be connected to further interfaces which mediate the various technological levels of the devices.

The object of the present invention is to eliminate the drawbacks of the prior art by providing a multimedia device that is able to integrate a plurality of devices into a single device and can be controlled by the user through a single remote control.

This object is achieved in accordance with the invention with the characteristics listed in appended independent claim 1.

Advantageous embodiments of the invention will be apparent from the dependent claims.

The multimedia device according to the invention comprises a main board which has hardware designed to implement the functions of a personal computer (PC).

The main characteristic of the invention is represented by the fact that the multimedia device comprises a Set-Top-Box interface designed to be connected to a television aerial to implement the functions of a digital television signal decoder. The Set-Top-Box interface is operationally connected to the main board to allow the digital television signal to be displayed by means of a monitor that can be connected to the main board.

The multimedia device further comprises an infrared (IR) receiver, operationally connected to the Set-Top-Box interface and to the main board to control both the digital decoder functions implemented in the Set-Top-Box interface and the personal computer functions implemented in the main board through a single remote control.

In this manner all the functions of both a personal computer and a digital television signal decoder are implemented in a single device that can be managed by the user with a single remote control, with the possibility of adding, simply and immediately, all the desired peripherals which are managed by the hardware installed in the main board of the personal computer.

For example, a monitor operationally connected to the main board to display images, and speakers operationally connected to the main board to broadcast the audio signal, so as to obtain a multimedia device ready for use by the user.

Further characteristics of the invention will be made clearer by the detailed description that follows, referring to a purely exemplary and therefore non limiting embodiment thereof, illustrated in the appended drawings, in which:
Fig. 1 is a block diagram illustrating diagrammatically the multimedia device according to the invention;
Fig. 2 is a block diagram illustrating in greater detail the hardware of the multimedia device according to the invention; and

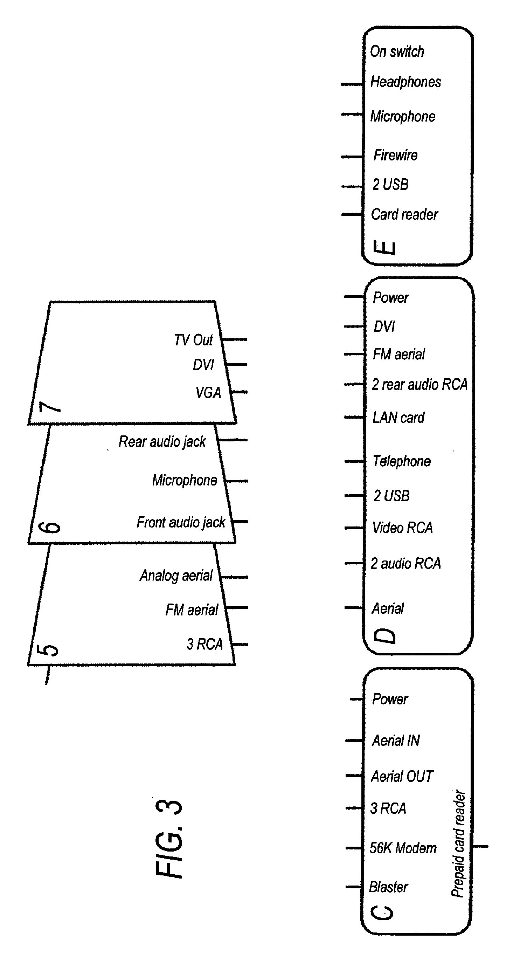

Fig. 3 is an enlarged view illustrating three hardware boards and three interfaces of the block diagram of Fig. 2, with the respective inputs and outputs highlighted.

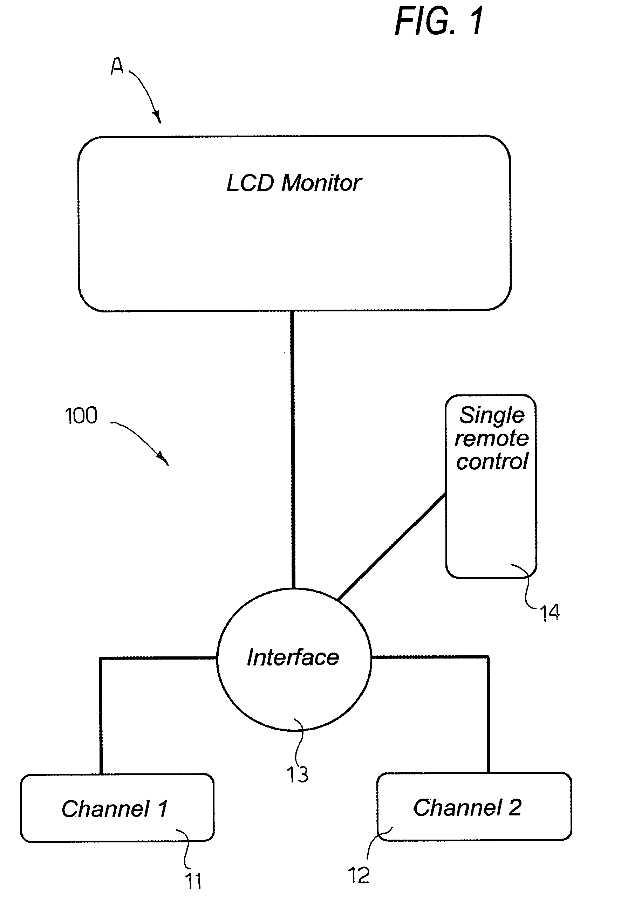

With reference for now to Fig. 1, a multimedia device according to the invention, denoted as a whole with reference numeral 100, is described.

The multimedia device 100 comprises two channels 11 e 12 integrated and operatively connected to each other by means of an interface 13. The interface 13 communicates with a monitor A, controlled by a remote control 14.

The first channel 11 comprises hardware boards which implement a personal computer (PC) in which an operating system is installed, preferably the Microsoft Media Center™ system.

The second channel 12 comprises hardware boards which implement a digital TV decoder with interactive management, through the MHP protocol or another protocol. The second channel 12 may further comprise a prepaid card reader management system for viewing (decoding) of encrypted pay-TV programmes, for example in NAGRA and IRDETO 2 format.

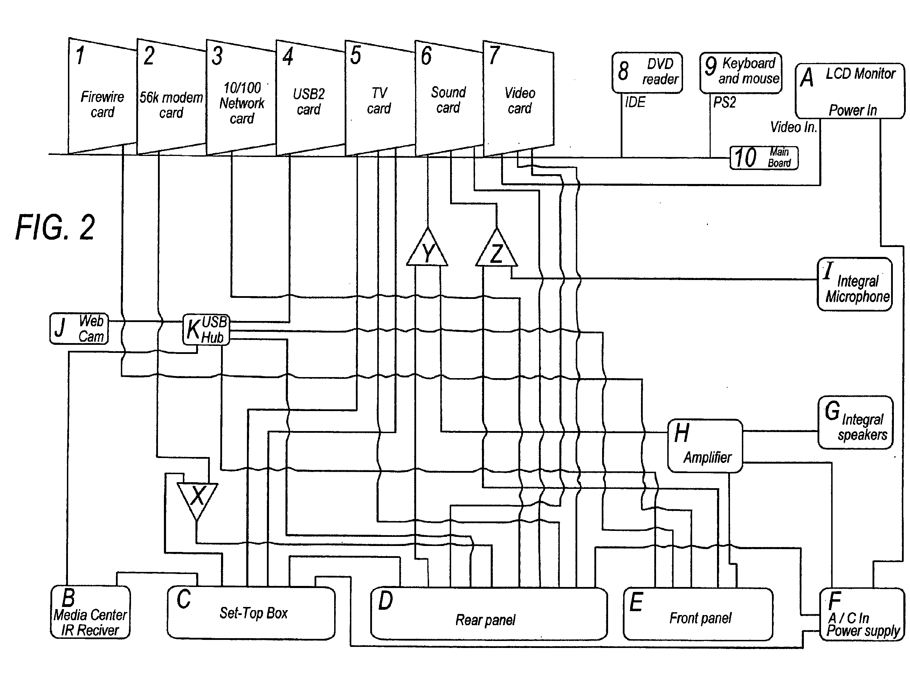

The interface 13, which will be described in greater detail with reference to Figure 2, allows the two channels 11 and 12 to be integrated and is controlled by a single remote control 14. The video signals processed by the interface 13 are displayed on the monitor A, which is preferably an LCD or plasma monitor.

The hardware of the multimedia device 100 is described in greater detail with reference to Figures 2 e 3.

The multimedia device 100 comprises a main board 10 of the type commonly used for PCs and thus per se known. A processor (CPU), a volatile memory (RAM) and a hard memory (HDD) are installed on the main board so as to implement a PC which preferably has as its operating system Microsoft Media Center™ installed in the hard memory.

A DVD writer (8) which allows CDs and DVDs to be read and/or written is connected, by means of an IDE connector, to the main board 10. Furthermore a keyboard and mouse (9) which allow the user to interact with the PC implemented in the main board 10 are connected by means of a PS2 connector to the main board 10.

A USB hub (K) connected to a plurality of USB ports as will be described hereunder is also integrated into the main board 10 (although it is shown separate in figure 2 for greater clarity).

On the main board 10 there are installed/integrated a plurality of hardware boards 1-7 which interact with a plurality of peripherals A-J, possibly through signal splitters X, Y, Z.

The multimedia device 100 comprises the following peripherals: an LCD monitor (A), an IR receiver (B), a Set-Top-Box (C), a rear panel (D), a front panel (E), a power supply (F), integral loud speakers (G) connected to an amplifier (H), an integral microphone (I) and a WebCam (J).

In particular, the Set-Top-Box (C) is an interface capable of managing the visual and interactive content of the digital television system. The Set-Top-Box (C) may be compatible with the MHP standard and comprise a prepaid card reader for decoding encrypted pay-TV programmes, for example in NAGRA and IRDETO 2 format.

The Set-Top-Box (C) further comprises:
- an infrared input connected to the IR receiver (B);
- an integral 56K modem for connection to a telephone line;
- three RCA output connectors for output of the digital television video and audio signal;
- an aerial input connected to the rear panel (D) to take the television signal captured by the TV aerial connected to the rear panel (D);
- an aerial output to send out the analogical television signal; and
- a power input connected to the power supply (F) to receive the power.

The rear panel (D) and the front panel (E) are two peripherals disposed respectively in the rear and front part of the multimedia device 100 and comprise a plurality of input and output ports necessary for operation of the multimedia device 100, as will be better described hereunder. The front panel also further comprises a pushbutton to turn on the multimedia device 100.

The power supply (F) is connected to the rear panel (D) which in turn is connected to a mains electrical power supply. Thus the power supply (F) takes power from the mains and distributes it to the Set-Top-Box (C), the amplifier (H), the main board 10 and the monitor (A).

The boards to be installed on the main board 10 to manage the peripherals are described below.
1) FireWire IEEE1394 board. This board (1) adds a port suitable for connection of external peripherals, such as digital video cameras or external hard disks. It is connected to a FireWire input port situated on the front panel (E) of the multimedia device 100.
2) 56K modem board. This board (2) implements a modem on the main board 10 and thus allows connection to the Internet through a normal telephone line. The modem board (2) is connected to an RJ11 output connector of a telephone splitter (X) which in turn is connected to an RJ11 input connector disposed on the rear panel (D) to receive the connector of a telephone duplex adaptor connected to the telephone line. The telephone splitter (X) comprises a second RJ11 output connector connected to the 56K modem of the Set-Top-Box (C) interface. Therefore the telephone splitter (X) is responsible for splitting the telephone signal coming from the telephone line to send it both to the modem board (2) of the main board 10 and to the modem of the Set-Top-Box (C) interface.
3) LAN 10/100 network card. This board (2) allows connection of the multimedia device 100 to other computers or to the Internet by means of a router. It is connected to an RJ45 input/output port situated in the rear panel (D) of the multimedia device to allow connection to other computers.
4) USB2 board. This board (3) is integrated into the main board 10 and allows the connection of external USB type peripherals, such as printers, memories, scanners, etc. The USB2 board (4) is connected to the USB hub (K) integrated into the main board 10.
   It must be considered that both the USB board and the USB hub are integrated into the main board 10, even if in Figure 2 they are shown separate for better logical clarity.
   The USB (K) hub is connected to a webcam (J), an infrared receiver (B), a memory card reader situated in the front panel (E) and two USB port disposed respectively in the rear panel (D) and in the front panel (E) for connection of other USB peripherals.
   The WebCam (J) serves to record in the mutimedia device films and photographs from the outside. The infrared receiver (B) is of the Media Center™ type and is connected, through a blaster cable, to the set-top-box (C). In this manner the set-top-box (C) can be controlled by means of the remote control 14 (illustrated in Fig. 1). A memory card reader that serves for reading generic memory cards, such as those of digital cameras or MP3 readers, is integrated into the front panel (E).
5) Board for digital television signal acquisition and tuning of the analog TV and FM radio signal. This acquisition/tuning board allows the main board 10 of the PC to acquire the analog television signal and the FM radio signal captured by the TV and FM radio aerials.
   For this purpose the rear panel (D) has two connectors for connection to a TV aerial and to an FM radio aerial. The TV aerial connector of the rear panel (D) is connected to the Set-Top-Box (C), so to bring to the inside thereof the analog and digital TV signal captured by the TV aerial.
   The Set-Top-Box (C) comprises three RCA outputs (white, red, yellow) for the digital audio and video signal, connected respectively to three RCA inputs (white, red, yellow) of the acquisition/tuning board (5). Furthermore the Set-Top-Box (C) comprises an output (aerial OUT) for the analog television signal connected to an input (analog aerial) of the tuner of the acquisition/tuning board (5).
   The rear panel (D), on the other hand, comprises an FM aerial input for the FM radio signal connected to an input (FM aerial) of the tuner of the acquisition/tuning board (5).
6) Sound card. This board (6) allows music and sounds to be reproduced. The sound card (6) comprises:
   - a jack-type audio output connector for the audio signal of the front channel;
   - a jack-type audio output connector for the audio signal of the rear channel; and
   - an audio input connector for the audio signal coming from the microphone.
   The audio output connector (front channel) is connected to the audio signal splitter (Y). Two audio signals leave the splitter (Y), in which the first is sent to two RCA connectors (red, white) situated in the rear panel (D) for connection to the speakers and the second is sent to the amplifier (N) which amplifies it and sends it to the integrated speakers (G). Furthermore, the amplifier (N) sends the amplified audio signal (front channel) to an output jack situated on the front panel (E) to allow connection of headphones.
   The audio output connector (rear channel) is connected directly to two RCA connectors (red, white) situated in the rear panel (D) for connection of speakers.
   The audio input connector is connected to the output of the audio signal splitter (Z). This splitter (Z) comprises two input jacks, one connected to an integral microphone (I) and the other connected to an input jack situated in the front panel (E) to allow connection of a second microphone.
7) Video card. This board (7) allows the video signal to be displayed in the monitor (A) or other display device. For this purpose the video card (7) comprises:
   - a VGA video output connector connected to the video input of the monitor (A);
   - a DVI video output connector for the high definition video signal which is connected to a DVI video output connector situated on the rear panel (D) to allow connection of a high-definition television; and
   - an S-video output connector for the low definition video signal which is connected to an RCA video output connector (yellow) situated on the rear panel (D) to allow a low-definition television set to be connected.

It is obvious that the core of the invention is represented by integrating into a single multimedia device 1 a PC main board 10 and a digital decoder Set-Top-Box (C) and by the possibility of controlling said multimedia device 1 with a single remote control 14. All the other peripherals described in the present description, such as the monitor (A), the speakers (G), the microphone (I), the webcam (J), the keyboard and mouse (9), the DVD reader (8), etc. can be added to the multimedia device 1 according to the user's requirements.

Numerous changes and modifications of detail within the reach of a person skilled in the art can be made to the present embodiment of the invention without departing from the scope of the invention as set forth in the appended claims.

## Claims

1. A multimedia device (100) comprising:
- a main board (10) which has hardware suitable to implement personal computer (PC) functions,
**characterised in that** if further comprises:
- a Set-Top-Box (C) interface designed to be connected to a television aerial to implement the functions of a digital television decoder, said Set-Top-Box (C) interface being operationally connected to said main board (10) to allow display of the digital television signal by means of a monitor (A) which can be connected to the main board (10), and
- an infrared (IR) receiver, operationally connected to said Set-Top-Box (C) interface and to said main board (10) to control, by means of a single remote control (14), said Set-Top-Box (C) interface and said main board (10).

2. A multimedia device (100) according to claim 1, **characterised in that** said main board (10) of the PC and said Set-Top-Box interface (C) are integrated into a single box, so as to have an all-in-one product and be able to manage it with a single remote control (14).

3. A multimedia device (100) according to claim 1 or 2, **characterised in that** said Set-Top-Box interface (C) is compatible with interactivity standards, such as MHP, and comprises a prepaid card reader able to read cards for decoding encrypted pay-TV programmes.

4. A multimedia device (100) according to any one of the preceding claims, **characterised in that** said main board (10) comprises a USB hub (K) connected to a USB board (4) mounted on the main board (10), said USB hub (K) further being connected to said IR receiver (B).

5. A multimedia device (100) according to any one of the preceding claims, **characterised in that** it further comprises:
- a monitor (A) operationally connected to the main board (10) to display images, and
- speakers (G) operationally connected to the main board (10) to broadcast an audio signal.

6. A multimedia device (100) according to claim 4 or 5, **characterised in that** said USB hub (K) is connected to a webcam (3).

7. A multimedia device (100) according to any one of the preceding claims, **characterised in that** on said main board (100 there is mounted an acquisition/tuning board (5) able to acquire the digital television signal coming from said Set-Top-Box interface (C) and tune the analog television signal coming from a television aerial connected to said multimedia device (100).

8. A multimedia device (100) according to claim 7, **characterised in that** said acquisition/tuning board (5) further comprises a tuner to tune the FM radio signal coming from an FM radio aerial connected to said multimedia device (100).

9. A multimedia device (100) according to any one of the preceding claims, **characterised in that** a DVD/CD reader/writer and/or a keyboard and/or mouse (9) are connected to said main board (10).

10. A multimedia device (100) according to any one of the preceding claims, **characterised in that** mounted on said main board (10) is an audio card (6) which comprises an audio input connected to a microphone (I) and an audio output connected to an amplifier (N) in turn connected to speakers (G).

11. A multimedia device (100) according to any one of the preceding claims, **characterised in that** mounted on said main board (10) is a video card (7) which comprises a VGA video output connected to said monitor (A), a DVI video output for the high-definition television signal and an S-Video output for the low-definition television signal.

12. A multimedia device (100) according to any one of the preceding claims, **characterised in that** mounted on said main board (10) is a FireWire board (1) for connection of a digital video camera or other peripherals such as hard-disks external to said multimedia device (100).

13. A multimedia device (100) according to any one of the preceding claims, **characterised in that** mounted on said main board (10) is a network board (3) for network connection of said multimedia device (100) with other PCs and for connection to the Internet through a router.

14. A multimedia device (100) according to any one of the preceding claims, **characterised in that** mounted on said main board (10) is a modem board (2) for connection to the Internet of said multimedia device (100) through a telephone line.

15. A multimedia device (100) according to claim 14, **characterised in that** it comprises a telephone signal splitter (X) which receives the telephone signal from a telephone line and sends it to a modem board (2) mounted on the main board and to the modem integrated into the Set-Top-Box interface.
